Europäisches Patentamt

European Patent Office

Office européen des brevets

(19)

(11) **EP 0 453 327 B1**

(12) **FASCICULE DE BREVET EUROPEEN**

(45) Date de publication et mention
de la délivrance du brevet:
**01.05.1996 Bulletin 1996/18**

(51) Int Cl.6: **G05D 1/04**, G05D 1/10

(21) Numéro de dépôt: **91400342.1**

(22) Date de dépôt: **12.02.1991**

(54) **Procédé de pilotage d'un aéronef en vol à très basse altitude**

Methode zur Lenkung eines Flugzeuges im Tiefflug

Method of guiding an airborne vehicle on a very low altitude flight path

(84) Etats contractants désignés:
**DE FR GB IT SE**

(30) Priorité: **22.02.1990 FR 9002182**

(43) Date de publication de la demande:
**23.10.1991 Bulletin 1991/43**

(73) Titulaire: **SEXTANT AVIONIQUE S.A.**
**F-92366 Meudon la Forêt Cédex (FR)**

(72) Inventeur: **Larrieu, Bertrand**
**F-92220 Bagneux (FR)**

(74) Mandataire: **Bloch, Gérard et al**
**2, square de l'Avenue du Bois**
**F-75116 Paris (FR)**

(56) Documents cités:
**EP-A- 0 083 569**        **EP-A- 0 234 237**
**FR-A- 2 607 948**        **US-A- 3 530 465**
**US-A- 4 302 745**

- **IEEE 1988 NATIONAL AEROSPACE AND
  ELECTRONICS CONFERENCE NAECON 1988
  vol. 2, 23-27 mai 1988, pages 540-545, Dayton
  Convention Center, US; A. WEIMANN et al.:
  "Terrain Masking and Threat Avoidance Using
  Land Mass Data"**
- **PROCEEDINGS OF THE 1988 AMERICAN
  CONTROL CONFERENCE vol. 2, 15-17 juin 1988,
  pages 1440-1447, Atlanta Hilton Hotel, Atlanta,
  US; P.K.A. MENON et al.: "Helicopter Trajectory
  Planning Using Optimal Control Theory"**

## Description

L'environnement de menaces dans lequel les aéronefs, notamment les avions, doivent évoluer rend nécessaire le vol à très basse altitude pour permettre aux avions d'échapper au mieux à ces menaces et d'améliorer leurs performances tout au long de leurs missions.

Au sol, une préparation de mission permet de définir un itinéraire de référence dans le plan horizontal.

En vol, il faut générer en temps réel une trajectoire qui minimise l'altitude du terrain survolé et l'altitude de vol tout en respectant des contraintes de sécurité (hauteur de garde par rapport au sol), des contraintes de manoeuvrabilité (facteur de charge, angle et vitesse de roulis) et des contraintes opérationnelles (largeur de couloir).

En d'autres termes, en vol, à partir de l'itinéraire de référence horizontal, on détermine, toujours dans le plan horizontal, une trajectoire à long terme d'évitement de terrain et de menaces, donc sa trace au sol et, enfin, un itinéraire à court terme dans un repère à deux dimensions x, y, dans un couloir centré sur la trajectoire d'évitement de terrain et de menaces. A partir du relief relevé dans ce couloir, on détermine, dans le plan vertical, une trajectoire à court terme de suivi de terrain qui, combinée à l'itinéraire à deux dimensions horizontales, fournit la trajectoire de vol à très basse altitude dans un système à quatre dimensions x, y, z, t.

A titre d'exemple, le document FR-A-2 607 948 décrit un procédé du type de celui du préambule de la revendication 1.

Jusqu'à maintenant, on procédait dans le plan vertical en ménageant une marge de facteur de charge positif et une marge de facteur de charge négatif mais sans prendre en compte, ou mal, la variation de ce facteur de charge due à l'inclinaison de l'aéronef.

Le facteur de charge est le rapport entre le poids apparent de l'avion et son poids réel et lorsque le facteur de charge devient trop important, il peut provoquer la déformation, voire même la rupture, de l'avion. Par convention, un avion subit un facteur de charge relatif positif, à cabrer, si son accélération tend à augmenter son poids apparent, et négatif, à piquer, si son accélération tend à le diminuer. Le facteur de charge augmente, non seulement lors d'une ressource, mais aussi en virage, avec l'inclinaison de l'avion.

Pour des raisons de confort du pilote ou de sécurité, le facteur de charge ne doit pas dépasser des valeurs maximales déterminées.

Le facteur de charge est d'autant plus important que le rayon de courbure de la trajectoire est petit. Aux facteurs de charge maximaux positif et négatif, correspondent ainsi respectivement deux rayons de courbure minimaux.

Actuellement, pour la détermination de la trajectoire dans le plan vertical, on admet que les rayons de courbure minimaux sont constants et, avec eux, les accélérations verticales maximales. La détermination de la trajectoire de suivi de terrain se fonde sur une carte élaborée par un radar complétée éventuellement par des informations issues d'un fichier de cartes numérisées et, ce, sur un horizon à court terme d'une dizaine de kilomètres compatible avec la portée du radar. Sur l'horizon considéré, la vitesse de l'avion est supposée constante et la trajectoire est réactualisée en permanence. Les accélérations latérales, résultant des évolutions de l'avion dans le plan horizontal, ne sont prises en compte, dans les contraintes d'accélération verticale, que dans la limite d'accélérations maximales supposées constantes.

Pouvoir respecter les contraintes de facteur de charge avec des contraintes d'accélération verticale variables et pouvoir ainsi anticiper les phases à cabrer avant un virage pour minimiser la hauteur de vol, tel est l'objectif de la présente invention.

A cet effet, la présente invention concerne un procédé de pilotage à très basse altitude d'un aéronef pouvant subir un facteur de charge maximal à cabrer et un facteur de charge maximal à piquer, dans lequel on détermine en vol une trajectoire horizontale d'évitement de terrain et de menaces EVTM, correspondant à une loi de commande en roulis, puis une trajectoire verticale de suivi de terrain SDT, correspondant à une loi de commande en accélération verticale, caractérisé par le fait qu'on détermine les accélérations latérales de l'aéronef sur la trajectoire horizontale EVTM et que les portions à cabrer de la trajectoire verticale SDT sont déterminées par la marge de facteur de charge à cabrer laissée disponible par les accélérations latérales sur la trajectoire EVTM.

Avantageusement,

- les portions à cabrer de la trajectoire SDT sont déterminées pour que l'aéronef soit soumis à une accélération verticale telle qu'il subisse le facteur de charge maximal à cabrer,

- les portions à piquer de la trajectoire SDT sont déterminées pour que l'avion subisse le facteur de charge maximal à piquer,

- pour déterminer les portions à piquer de la trajectoire SDT, on isole sur un horizon de travail des sommets critiques à survoler à une hauteur de garde et à pente nulle,

- les portions à piquer de la trajectoire SDT sont circulaires et tangentes aux sommets critiques,

- pour déterminer la trajectoire EVTM, on minimise un indice de performance constitué de l'intégrale d'un indice de coût

$$Z + KY^2$$

dans lequel
Z est l'altitude de l'aéronef, Y l'écart latéral entre la position de l'aéronef et un itinéraire de référence et K un coefficient de pondération,

- la loi de commande élémentaire de minimisation de l'indice de coût est déterminée en découpant la trajectoire EVTM en pas de visée, sur chacun desquels on vise le point, écarté de l'itinéraire de référence de Y, qui annule la dérivée première, par rapport à la variable Y, de l'indice de coût, en déterminant le lieu des points ainsi visés, qui est la courbe d'équation

$$Y(t) = - \frac{1}{2K} \frac{\Delta Z}{\Delta Y}$$

et en procédant à une triple dérivation de la fonction Y(t).

La détermination en vol de la trajectoire horizontale d'évitement de terrain et de menaces EVTM étant particulièrement importante pour la mise en oeuvre du procédé de pilotage à très basse altitude de l'invention, la demanderesse entend également revendiquer les caractéristiques essentielles de cette détermination de trajectoire EVTM en tant que telles.

L'invention sera mieux comprise à l'aide de la description suivante de la mise en oeuvre préférée du procédé de pilotage d'un avion, conforme à l'invention, en référence aux dessins annexés, sur lesquels

- la figure 1 représente un profil de relief dans un plan perpendiculaire à un itinéraire de référence et illustre l'écartement de l'avion de cet itinéraire pour éviter le terrain;

- la figure 2 représente un profil de relief et illustre l'étape des points visés du procédé de pilotage de l'invention;

- la figure 3 illustre schématiquement les étapes de détermination en vol de la trace au sol d'évitement de terrain et de menaces;

- la figure 4 illustre très schématiquement les étapes de détermination en vol de la trajectoire de suivi de terrain;

- la figure 5 représente un profil de relief dans le plan de suivi de terrain et illustre la détermination des sommets critiques;

- la figure 6 représente les portions de trajectoire à piquer de la trajectoire verticale de suivi de terrain;

- la figure 7 illustre la loi de commande élémentaire à piquer de la gouverne de profondeur de l'avion;

- la figure 8 illustre la loi globale d'accélération verticale de suivi de terrain et

- la figure 9 illustre les étapes de détermination en vol de la trajectoire de suivi de terrain.

Le procédé, qui va être décrit, permet de déterminer la loi de commande en roulis et la loi de commande en accélération verticale d'un aéronef, en l'occurence un avion, lois qui, combinées, forment des lois de commande des ailerons et des gouvernes de profondeur pour que l'avion suive, de façon globale, une trajectoire à très basse altitude.

Il doit être précisé que par gouverne de profondeur on entend également toute gouverne équivalente et que par aileron on entend toute gouverne de gauchissement. En outre, les lois de commande dont il s'agit ne sont naturellement pas celles qui commandent directement la gouverne de profondeur et les ailerons; ce sont des lois qui permettent d'élaborer des ordres de commande de gouverne.

<u>Détermination en vol de la trace au sol d'évitement de terrain et de menaces</u>

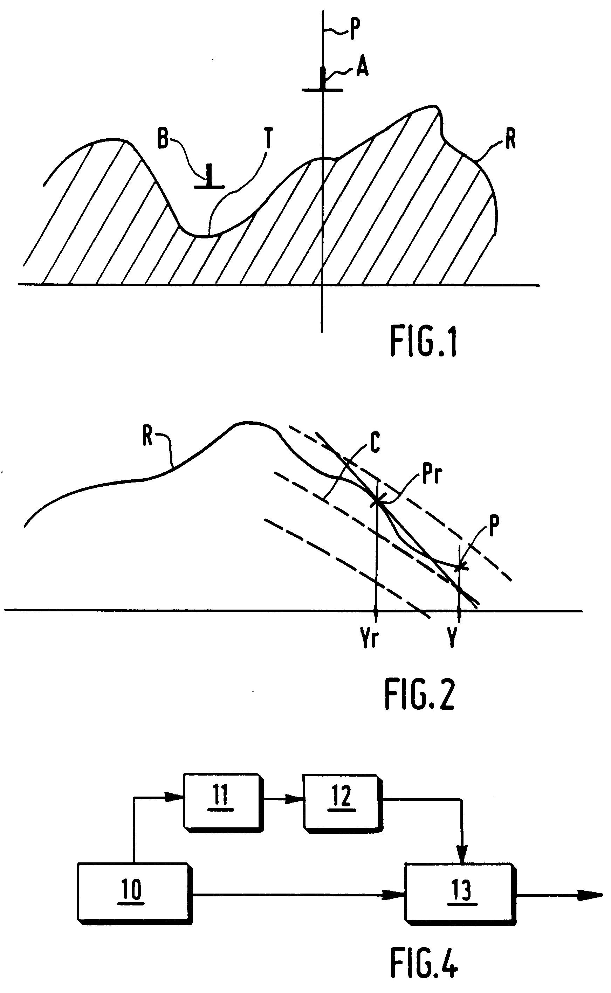

Cette trace au sol, donc dans un plan horizontal, doit minimiser l'altitude du terrain survolé, pour profiter au mieux des masques offerts par les reliefs, sans pour autant trop s'écarter de l'itinéraire de référence déterminé au sol lors de la préparation de la mission. Si on considère que l'avion, à un instant donné, et selon l'itinéraire élaboré au sol, devrait se trouver en A, dans un plan vertical P, au dessus d'un relief R, la trace d'évitement l'écartera latéralement du plan P pour l'amener en B, au-dessus d'un thalweg T (figure 1). Cette trace au sol minimise, pendant toute la navigation, un indice de performance qui intègre l'altitude du terrain Z et l'écart latéral Y par rapport à l'itinéraire de référence, cet indice étant pondéré par un coefficient K permettant de moduler l'importance accordée à la fonction d'évitement.

La détermination de la trace au sol doit intégrer des contraintes :

- limites de l'angle de roulis, ou inclinaison,
- limites de la vitesse de roulis,
- zones de vol ou couloirs autorisés, en écarts latéraux maximaux par rapport à l'itinéraire de référence.

. L'itinéraire de référence, ou plan de vol horizontal, est découpé en segments de navigation.

La génération en vol de la trajectoire au sol s'effectue par segment d'optimisation correspondant à l'horizon de calcul. Une fois la trajectoire d'un serpent d'optimisation déterminée, l'horizon de calcul glisse le long de l'itinéraire de référence et le serpent d'optimisation adjacent est traité.

. A l'itinéraire de référence, correspond une loi de commande des ailerons de l'appareil, c'est-à-dire une loi de commande en roulis. Déterminer en vol la trace d'évitement, c'est déterminer les lois des variations à appliquer à la loi de commande en roulis pour minimiser l'indice de performance en respectant les contraintes.

Indice de performance

. Il est représenté par la fonction intégrale

$$V_1(t) = \int_{t_o}^{t_f} (Z + K\,Y^2)\,dt$$

où

$t_o$ est l'instant de survol de l'origine du segment d'optimisation,
$t_f$ est l'instant de survol de la fin du segment d'optimisation,
$Z$ est l'altitude du terrain survolé à l'instant t,
$Y$ est l'écart latéral entre la position de l'avion et l'itinéraire de référence à l'instant t,
$K$ est le coefficient de pondération évoqué plus haut.

En fait, K pondère les écarts latéraux. Si K est faible, le poids des écarts latéraux est minoré et l'"évitement" est donc favorisé. Si K est fort, le poids des écarts latéraux est majoré et l'évitement est donc pénalisé par rapport au suivi de l'itinéraire de référence.

. Chaque segment d'optimisation est découpé en pas de visée élémentaire, sur chacun desquels on détermine-on vise-à un instant donné t le point de coordonnées X, Y qui annule la dérivée première par rapport à la variable Y, du terme intégré de l'indice de performance, appelé coût,

$$Z + K\,Y^2$$

Le lieu des points visés, sur chaque segment d'optimisation est la courbe d'équation

$$\frac{\Delta Z}{\Delta Y} + 2\,K\,Y(t) = 0$$

Soit

$$Y(t) = -\frac{1}{2K}\frac{\Delta Z}{\Delta Y}$$

Sur chaque pas, le point visé P, d'ordonnée Y, est donc sur la verticale de l'intersection, d'une part, de la tangente, de pente $\frac{\Delta Z}{\Delta Y}$, au profil R du terrain au point $P_r$ d'ordonnée $Y_r$ de l'itinéraire de référence et, d'autre part, de la courbe isocoût, ou de coût constant, C la plus proche (figure 2).

A partir de la fonction Y(t), on détermine facilement, par triple dérivation par rapport au temps, la loi de commande élémentaire $\overset{\cdots}{Y}(t)$ de vitesse de roulis à appliquer à la loi de commande en roulis initiale de l'itinéraire de référence pour faire passer l'avion au-dessus des points visés.

Contrainte de couloir

Un couloir étant défini par sa largeur $2y_{max}$ la contrainte de couloir se traduit par la double relation

$$|Y(t)| < Y_{max}$$

A partir de cette double relation, il est facile, par détermination des écarts latéraux, de déterminer, d'abord, la fonction élémentaire de la variation latérale à appliquer pour respecter cette contrainte de couloir puis, par triple dérivation, la loi de commande élémentaire $\dddot{Y}'(t)$ de roulis à appliquer à la loi de commande en roulis de l'itinéraire de référence pour maintenir l'avion à l'intérieur du couloir ou l'y faire revenir.

Contrainte de vitesse de roulis

La contrainte de vitesse de roulis se traduit par la relation

$$|\dddot{y}(t)| < \dddot{Y}_{max}$$

A partir de cette relation, il est facile, par détermination des écarts, de déterminer directement la loi de commande élémentaire $\dddot{Y}''(t)$ de roulis à appliquer à la loi de commande en roulis.

Contrainte d'angle de roulis

La vitesse de roulis est proportionnelle à la dérivée première de l'angle de roulis qui, lui-même est proportionnel à la dérivée première du cap, qui lui-même est proportionnel à la dérivée première de l'écart latéral Y. La contrainte d'angle de roulis se traduit par la double relation

$$|\ddot{y}(t)| < \ddot{Y}_{max}$$

A partir de cette double relation, il est facile, par détermination des écarts, de déterminer, d'abord, la fonction élémentaire de la variation d'angle à appliquer pour respecter la contrainte puis, par simple dérivation, la loi de commande élémentaire $\dddot{Y}'''(t)$ de roulis à appliquer à la loi de commande en roulis.

En définitive, l'avion doit évoluer dans le plan horizontal en minimisant l'indice de performance et sous trois contraintes, aboutissant à quatre lois de commande élémentaires de vitesse de roulis

$$\dddot{Y}(t), \dddot{Y}'(t), \dddot{Y}''(t), \dddot{Y}'''(t)$$

qu'il faut correler à l'aide de coefficients de pondération pour tenir compte de leur interdépendance et finalement obtenir la loi de commande globale $\delta u(t)$ à appliquer à la loi de commande en roulis initiale U(t) et servant à l'intégration de la trajectoire d'évitement de terrain et de menaces.

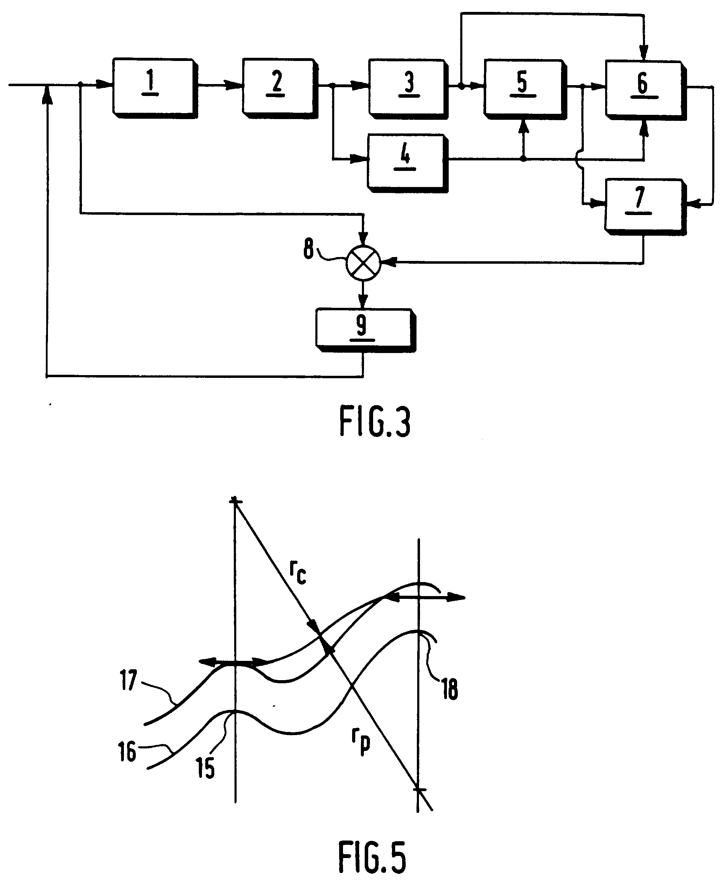

Schématiquement, et en référence à la figure 3, le procédé de détermination en vol de la trace au sol d'évitement de terrain et de menaces se déroule, à chaque pas de visée, comme indiqué ci-après.

A chaque point de calcul sur un pas, d'intégration de la trajectoire, ici de l'ordre de deux cent cinquante mètres, la loi de commande en roulis est intégrée (1). A partir de la trajectoire ainsi obtenue, on vise des points (2), on détermine (3) celui pour lequel la dérivée du coût s'annule et l'indice de performance est minimisé, on calcule (4) les contraintes de couloir, d'angle de roulis et de vitesse de roulis auxquelles le point de visée déterminé doit satisfaire, on détermine (5) les quatre lois de commande élémentaires, on calcule (6) les coefficients de pondération de ces lois de commande, on détermine (7) la loi de commande globale, on la combine (8) à la loi de commande initiale et on décale (9) l'horizon d'un pas de décalage.

Pondération des lois de commande élémentaires

Un algorithme est utilisé pour le calcul des coefficients de pondération, compris entre 0 et 1, des lois de commande élémentaires qui sont ensuite combinées en un polynome linéaire.

Un calcul de sensibilité permet de prévoir les effets de chaque loi de commande élémentaire sur les quatre paramètres d'indice de performance, de couloir, d'angle de roulis et de vitesse de roulis. Il en résulte une matrice de prédiction $\Gamma$, avec, en lignes, les paramètres et, en colonnes, les lois.

Pour que les prédictions soient validées, la relation suivante, représentative du gradient projeté, doit être satisfaite :

$$\frac{1}{t_f - to} \int_{t_o}^{t_f} \int u^T(t) . \int u(t) dt \leqslant N^2$$

où N représente une norme à respecter.

On tire de cette relation d'abord le vecteur des variations prévues des quatre paramètres $\delta V_p$ puis le vecteur des coefficients de pondération $\mu$ ($K$, $K_1$, $K_2$, $K_3$) donné par la relation

$$\mu = - \Gamma^{-1} \delta V_p$$

On en tire la loi de commande globale $\delta U(t)$

$$\delta U(t) = - (tf\text{-}to) \mu^T L$$

où L est le vecteur des quatre lois de commande élémentaires.

Incidemment, les performances du procédé de détermination de la trajectoire d'évitement de terrain et de menaces qui vient d'être décrit sont remarquables. Il peut apporter un gain, en altitude moyenne de terrain survolé, qui peut être de plusieurs dizaines de mètres, pour un allongement moyen de la distance parcourue de 1 % seulement.

<u>Détermination en vol de la trajectoire verticale à court terme de suivi de terrain.</u>

Lorsqu'un avion, à partir d'une trajectoire rectiligne en palier, subit des forces déviatrices dans le plan horizontal et dans le plan vertical, avec une accélération horizontale (latérale) $\ddot{Y}(t)$ et une accélération verticale $\ddot{z}(t)$, il est soumis à un facteur de charge $J_Z$, souvent noté $n_z$xg, satisfaisant la relation

$$J_Z{}^2 = (\ddot{Z} + g)^2 + \ddot{Y}^2$$

g représentant l'accélération de la pesanteur.

Les trajectoires de suivi de terrain doivent assurer la sécurité de l'avion par rapport au sol et respecter certaines contraintes :

- hauteur de garde minimale par rapport au sol,
- hauteur de vol minimale,
- passage de sommets à la hauteur de garde et à pente nulle,
- contraintes d'accélérations verticales maximales à cabrer et à piquer,
- contraintes opérationnelles.

Les évolutions d'un avion dans le plan vertical en suivi de terrain SDT, selon le procédé de l'invention, sont liées à celles effectuées dans le plan horizontal en évitement de terrain et de menaces EVTM par le facteur de charge $J_Z$. Pour les évolutions à cabrer, la contrainte à prendre en compte est la marge de facteur de charge, en $\ddot{z}$, disponible après que celle, en $\ddot{Y}$ ait été consommée en virages pour suivre l'itinéraire EVTM.

Globalement, et en référence à la figure 4, la trajectoire SDT est donc déterminée (13), et l'avion ainsi piloté, en

- déterminant (10) la trajectoire EVTM, comme décrit plus haut,
- calculant (11) la valeur de l'accélération latérale $\ddot{Y}$ sur la trajectoire EVTM et
- calculant (12) la valeur de l'accélération verticale $\ddot{z}$max disponible pour ne pas dépasser les facteurs de charge $J_{Z\,max}$ à cabrer et à $J_{Z\,max}$ à piquer.

Le procédé de détermination de la trajectoire SDT repose sur les choix suivants :

- les phases à piquer doivent minimiser la hauteur de vol et être exécutées le plus possible au facteur de charge maximal à piquer,

- les phases à cabrer doivent maintenir l'avion au moins à la hauteur de garde et utiliser toute l'accélération verticale disponible pour que l'avion subisse le facteur de charge maximal à cabrer.

Cette détermination de trajectoire SDT comprend les étapes de

- détermination d'un profil de travail,

- recherche de sommets critiques,

- détermination des trajectoires à piquer autour des sommets critiques,

- détermination des trajectoires à cabrer.

Détermination du profil de travail

Il s'agit du profil vertical du terrain à survoler, décalé vers le haut de la hauteur de garde.
Il est déterminé par

- l'itinéraire d'évitement de terrain et de menaces EVTM préalablement déterminé,

- un radar,

- un fichier de cartes.

L'horizon de calcul reste le même que celui considéré dans la détermination de l'itinéraire EVTM.

Recherche de sommets critiques

Il s'agit des sommets pouvant être survolés à la hauteur de garde et à pente nulle, les contraintes de manoeuvrabilité étant naturellement prises en compte.

Un sommet est dit critique si, en partant à la verticale de ce sommet à pente nulle, les autres sommets sur l'horizon de travail peuvent être survolés à pente nulle après enchaînement d'une phase à cabrer à rayon de courbure minimal $r_c$ et d'une phase à piquer à rayon de courbure minimal $r_p$, la hauteur de garde étant respectée.

En référence à la figure 5, le sommet 15 du profil de terrain 16, impliquant un profil de travail 17, n'est pas un sommet critique, puisque le sommet 18, compris dans l'horizon de travail, ne pourrait pas, après un cabrer et un piquer à rayons minimaux, être survolé à la hauteur de garde et à pente nulle.

Si D est la distance de l'obstacle (18) au sommet considéré (15) et si on pose $R = r_c + r_p$, un sommet est considéré comme critique si aucun sommet sur l'horizon de travail ne dépasse de la courbe d'équation

$$H = R - (R^2 - D^2)^{1/2}$$

H étant l'écart de hauteur entre l'obstacle et le sommet considéré.

Les sommets critiques, par définition, sont vus par le radar et les portions de relief non visibles par lui, ou tout autre capteur frontal, ne peuvent pas affecter le procédé de détermination de l'invention.

Détermination des trajectoires à piquer autour des sommets critiques.

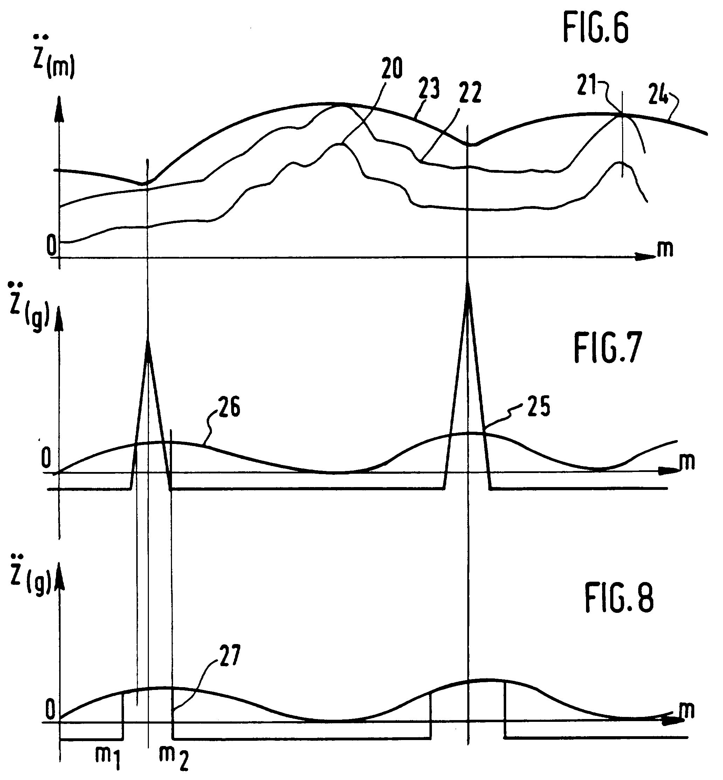

Il s'agit de former autour des sommets critiques 20, 21, en remplacement du profil de travail 22 (figure 6), des trajectoires circulaires 23, 24 tangentes aux sommets 20, 21 et de rayon égal au rayon minimal à piquer, si le terrain est suffisamment accidenté. Dans le cas contraire, on adopte le rayon de courbure du relief comme rayon de trajectoire circulaire. En d'autres termes, pour obtenir les meilleures performances en hauteur de vol, il faut chercher à exécuter des phases à piquer le plus souvent possible tout en s'assurant que lors des phases à cabrer la hauteur de garde et les contraintes d'accélération verticale sont respectées.

A cet effet, on intègre la trajectoire pas à pas autour de chaque sommet critique :

$$\dot{Z}(t + \Delta t) = \Delta t \, \ddot{Z}_{\text{piquer max}} + \dot{Z}(t)$$

$$Z(t + \Delta t) = \tfrac{1}{2} \, \Delta t^2 \, \ddot{Z}_{\text{piquer max}} + \Delta t \dot{Z}(t) + Z(t)$$

On procède de la même manière pour la portion initiale du profil de travail, avec une trajectoire circulaire qui respecte la pente initiale et on considère la somme des différentes trajectoires circulaires. A partir de la trajectoire, on détermine, par double dérivation, la loi de commande élémentaire de la gouverne de profondeur de l'avion, c'est-à-dire la loi de commande élémentaire en accélération verticale $\ddot{z}(t)$, mesurée en g, à appliquer lors des phases à piquer (figure 7).

Détermination des trajectoires à cabrer

La loi de commande élémentaire en accélération verticale, illustrée par la courbe 25 sur la figure 7, possède la double particularité d'être quasiment constante, avec une accélération négative égale à l'accélération maximale à piquer, sauf aux intersections des portions de trajectoires circulaires, où elle présente des pics d'accélération positive nettement supérieurs à l'accélération à cabrer disponible et qu'il faut écreter.

D'après la relation donnant le facteur de charge $J_Z$, l'accélération maximale à cabrer disponible est égale à

$$\ddot{Z} \text{ max à cabrer } (t) = \sqrt{J_{Z \text{ max à cabrer}} - \ddot{Y}(t)} - g$$

On admet ici encore que l'accélération est constante le long d'un pas de calcul.

A l'aide de la loi de commande $\ddot{z}(t)_{max}$ à cabrer illustrée par la courbe 26 sur la figure 7, à laquelle on compare la loi de commande élémentaire de la courbe 25 de la figure 7, on détecte les dépassements de l'accélération verticale à cabrer disponible.

Pour chaque dépassement, on définit un intervalle de travail, le long duquel on applique une correction. A cet effet, on détermine de nouveaux instants de début $T_1(m_1)$ et de fin $T_2(m_2)$ de phase à cabrer pour que

- le dépassement soit réparti de façon symétrique en-deçà du maximum d'accélération verticale disponible sur l'intervalle de travail considéré,

- la vitesse $\dot{z}(t)$ et l'altitude $Z(t)$ de l'avion à ces deux instants soient respectivement les mêmes.

Il s'agit, donc de résoudre de façon simple un système de deux équations à deux inconnues $T_1$, $T_2$.

En cas d'interférence de plusieurs dépassements, on élargit l'intervalle de travail.

On en déduit une loi de commande élémentaire d'accélération verticale à cabrer, annulant les dépassements sur l'horizon de travail et qui, combinée à la loi de commande élémentaire d'accélération verticale à piquer fournit, pour la commande automatique de la gouverne de profondeur de l'avion, la loi globale d'accélération verticale de suivi de terrain illustrée par la courbe 27 de la figure 8.

Grâce à cela, la hauteur de garde et donc la sécurité de l'avion sont respectées. Même si l'évitement de terrain et de menaces a absorbé une partie du facteur de charge, les accélérations à cabrer vont être produites plus tôt qu'elles ne l'auraient été si l'avion avait volé à inclinaison nulle.

La loi d'accélération verticale $\ddot{z}(t)$ étant déterminée, la trajectoire SDT en découle par une double intégration

$$z(t + \Delta t) = \frac{1}{2}\Delta t^2 \ddot{z}(t) + \Delta t \, \dot{z}(t) + z(t)$$

Une fois les trajectoires EVTM et SDT déterminées, la trajectoire de vol à très basse altitude dans l'espace temps est déterminée.

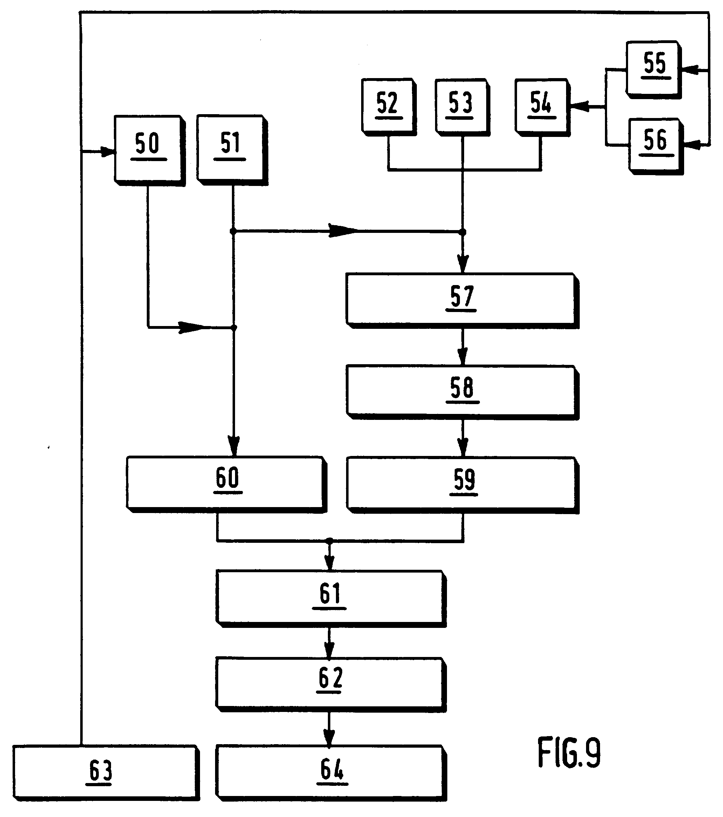

En définitive, et en référence à la figure 9, le pilotage de l'avion en suivi de terrain à très basse altitude comporte les étapes suivantes :

- la trajectoire d'évitement de terrain et de menaces EVTM ayant été déterminée (63) et les accélérations latérales en EVTM calculées (50), le facteur de charge maximal à cabrer étant connu (51), tout comme le facteur de charge maximal à piquer (52) et la hauteur de garde (53), à partir d'une carte de terrain (54) établie à partir des informations du radar (55) et éventuellement d'un fichier de cartes (56).

- on recherche les sommets critiques sur l'horizon de travail (57),

- on forme autour des sommets critiques les portions de trajectoire circulaires au rayon minimal à piquer (58),

- on en détermine la loi de commande élémentaire pour les phases à piquer (59),

- on calcule l'accélération verticale maximale à cabrer disponible (60),

- on détermine la loi de commande élémentaire pour les phases à cabrer (61),

- on détermine la loi de commande globale de la gouverne de profondeur (62),

- on en détermine la trajectoire de suivi de terrain (64).

Les intérêts du procédé qui vient d'être décrit sont nombreux.

La trajectoire de suivi de terrain respecte toujours la hauteur de garde et la hauteur de vol est minimisée. Les sommets des reliefs sont survolés à pente rigoureusement nulle et exactement à la hauteur de garde : la vulnérabilité de l'avion est donc réduite au mieux.

## Revendications

1. Procédé de pilotage à très basse altitude d'un aéronef pouvant subir un facteur de charge maximal à cabrer (51) et un facteur de charge maximal à piquer (52), dans lequel on détermine en vol (63) une trajectoire horizontale d'évitement de terrain et de menaces EVTM, correspondant à une loi de commande en roulis, puis (64) une trajectoire verticale de suivi de terrain SDT, correspondant à une loi (62) de commande en accélération verticale, caractérisé par le fait qu'on détermine (50) les accélérations latérales de l'aéronef sur la trajectoire horizontale EVTM et que les portions à cabrer de la trajectoire verticale SDT sont déterminées (64) par la marge de facteur de charge à cabrer (60) laissée disponible par les accélérations latérales sur la trajectoire EVTM.

2. Procédé selon la revendication 1, dans lequel les portions à cabrer de la trajectoire SDT sont déterminées pour que l'aéronef soit soumis à une accélération verticale telle qu'il subisse le facteur de charge maximal à cabrer.

3. Procédé selon l'une des revendications 1 et 2, dans lequel les portions à piquer de la trajectoire SDT sont déterminées (58) pour que l'aéronef subisse le facteur de charge maximal à piquer.

4. Procédé selon l'une des revendications 1 à 3, dans lequel, pour déterminer les portions à piquer de la trajectoire SDT, on isole (57) sur un horizon de travail des sommets critiques à survoler à une hauteur de garde et à pente nulle.

5. Procédé selon la revendication 4, dans lequel les sommets critiques dépassent d'une courbe d'équation

$$H = R - (R^2 - D^2)^{1/2}$$

dans laquelle

   D   est la distance entre chacun de ces sommets critiques et les obstacles compris dans l'horizon de travail,
   H   est l'écart de hauteur entre chacun de ces sommets critiques et ces obstacles et
   R   la somme du rayon de courbure minimal à cabrer et du rayon de courbure minimal à piquer de l'aéronef.

6. Procédé selon l'une des revendications 4 et 5, dans lequel les portions à piquer (58) de la trajectoire SDT sont circulaires et tangentes aux sommets critiques.

7. Procédé selon la revendication 6, dans lequel les portions à cabrer de la trajectoire SDT sont déterminées en appliquant des corrections aux intersections des portions de trajectoire à piquer.

8. Procédé selon l'une des revendications 1 à 7, dans lequel, pour déterminer (63) la trajectoire EVTM, on minimise un indice de performance constitué de l'intégrale d'un indice de coût

$$Z + KY^2$$

dans lequel

   Z   est l'altitude de l'aéronef,
   Y   l'écart latéral entre la position de l'aéronef et un itinéraire de référence et
   K   un coefficient de pondération.

9. Procédé selon la revendication 8, dans lequel à la minimisation de l'indice de coût correspond une loi de commande élémentaire en roulis.

10. Procédé selon la revendication 9, dans lequel ladite loi de commande élémentaire en roulis est corrigée par d'autres lois distinctes de commande élémentaires en roulis respectant des contraintes de couloir, de vitesse de roulis et d'angle de roulis, respectivement.

11. Procédé selon l'une des revendications 9 et 10, dans lequel les lois de commande élémentaires en roulis sont corrélées par des coefficients de pondération.

**12.** Procédé selon l'une des revendications 9 à 11, dans lequel la loi de commande élémentaire de minimisation de l'indice de coût est déterminée en découpant la trajectoire EVTM en pas de visée, sur chacun desquels on vise (2) le point, écarté de l'itinéraire de référence de Y, qui annule (3) la dérivée première, par rapport à la variable Y, de l'indice de coût, en déterminant (5) le lieu des points ainsi visés, qui est la courbe d'équation

$$Y(t) = -\frac{1}{2K} \frac{\Delta z}{\Delta Y}$$

et en procédant à une triple dérivation de la fonction Y(t).

**13.** Procédé de pilotage à très basse altitude d'un aéronef, dans lequel on détermine en vol (63) une trajectoire horizontale d'évitement de terrain et de menaces EVTM, caractérisé par le fait que, pour déterminer la trajectoire EVTM, on minimise un indice de performance constitué de l'intégrale d'un indice de coût

$$Z + KY^2$$

dans lequel

Z   est l'altitude de l'aéronef,
Y   l'écart latéral entre la position de l'aéronef et un itinéraire de référence et
K   un coefficient de pondération.

**14.** Procédé de pilotage selon la revendication 13, dans lequel à la minimisation de l'indice de coût correspond une loi de commande élémentaire en roulis.

**15.** Procédé de pilotage selon la revendication 14, dans lequel ladite loi de commande élémentaire en roulis est corrigée par d'autres lois distinctes de commande élémentaires en roulis respectant des contraintes de couloir, de vitesse de roulis et d'angle de roulis, respectivement.

**16.** Procédé de pilotage selon l'une des revendications 14 et 15, dans lequel les lois de commande élémentaires en roulis sont correlées par des coefficients de pondération.

**17.** Procédé de pilotage selon l'une des revendications 14 à 16, dans lequel la loi de commande élémentaire de minimisation de l'indice de coût est déterminée en découpant la trajectoire EVTM en pas de visée, sur chacun desquels on vise (2) le point, écarté de l'itinéraire de référence de Y, qui annule (3) la dérivée première, par rapport à la variable Y, de l'indice de coût, en déterminant (5) le lieu des points ainsi visés, qui est la courbe d'équation

$$Y(t) = -\frac{1}{2K} \frac{\Delta z}{\Delta Y}$$

et en procédant à une triple dérivation de la fonction Y(t).

**Patentansprüche**

**1.** Verfahren zur Steuerung eines Luftfahrzeugs, das einen maximalen Nose-up-Lastfaktor (51) und einen maximalen Nose-down-Lastfaktor (52) erfahren kann, in sehr niedriger Höhe, in dem man im Flug (63) eine horizontale, dem Boden und Gefährdungen ausweichende Flugbahn EVTM, die einem Richtungsänderungssteuergesetz entspricht, und dann (64) eine vertikale Geländefolgeflugbahn SDT bestimmt, die einem Vertikalbeschleunigungs-Steuergesetz (62) entspricht, dadurch gekennzeichnet, daß man die seitlichen Beschleunigungen des Luftfahrzeugs auf der horizontalen Flugbahn EVTM bestimmt (50) und daß die Nose-up-Abschnitte der vertikalen Flugbahn SDT durch die Nose-up-Lastfaktor-Marge (60) bestimmt werden (64), die nach der seitlichen Beschleunigungen auf der Flugbahn EVTM verfügbar bleibt.

**2.** Verfahren nach Anspruch 1, in dem die Nose-up-Abschnitte der Flugbahn SDT so bestimmt werden, daß das Luftfahrzeug einer solchen vertikalen Beschleunigung ausgesetzt ist, daß es den maximalen Nose-up-Lastfaktor erfährt.

**3.** Verfahren nach einem der Ansprüche 1 und 2, in dem die Nose-down-Abschnitte der Flugbahn SDT so bestimmt werden (58), daß das Flugzeug den maximalen Nose-down-Lastfaktor erfährt.

**4.** Verfahren nach einem der Ansprüche 1 bis 3, in dem man zur Bestimmung der Nose-down-Abschnitte der Flugbahn SDT in einer Sicherheitshöhe und mit der Neigung null zu überfliegende kritische Gipfel auf einem Arbeitshorizont isoliert (57).

5. Verfahren nach Anspruch 4, in dem die kritischen Gipfel eine Kurve der Gleichung

$$H = R - (R^2 - D^2)^{1/2}$$

übersteigen, in der

    D   die Entfernung zwischen jedem dieser kritischen Gipfel und den im Arbeitshorizont enthaltenen Hindernissen ist,
    H   die Höhenabweichung zwischen jedem dieser kritischen Gipfel und diesen Hindernissen ist und
    R   die Summe des minimalen Nose-up-Radius und des minimalen Nose-down-Radius des Luftfahrzeugs ist.

6. Verfahren nach einem der Ansprüche 4 und 5, in dem die Nose-down-Abschnitte (58) der Flugbahn SDT kreisförmig und zu den kritischen Gipfeln tangential sind.

7. Verfahren nach Anspruch 6, in dem die Nose-up-Abschnitte der Flugbahn SDT bestimmt werden, indem an den Schnittstellen der Nose-down-Bahnabschnitte Korrekturen vorgenommen werden.

8. Verfahren nach einem der Ansprüche 1 bis 7, in dem man zur Bestimmung (63) der Flugbahn EVTM einen Leistungsindex minimiert, der aus dem Integral eines Kostenindex

$$Z + KY^2$$

besteht, in dem

    Z   die Höhe des Luftfahrzeugs ist,
    Y   die seitliche Abweichung der Standort des Luftfahrzeugs von einer Bezugsflugstrecke und
    K   ein Wichtungskoeffizient ist.

9. Verfahren nach Anspruch 8, in dem der Minimierung des Kostenindex ein elementares Richtungsänderungssteuergesetz entspricht.

10. Verfahren nach Anspruch 9, in dem dieses Richtungsänderungssteuergesetz durch andere verschiedene elementare Richtungsänderungssteuergesetze korrigiert wird, die Flugschneisen-, Richtungsänderungsgeschwindigkeits- bzw. Richtungsänderungswinkeleinschränkungen berücksichtigen.

11. Verfahren nach einem der Ansprüche 9 und 10, in dem die elementaren Richtungsänderungssteuergesetze durch Wichtungskoeffizienten korreliert werden.

12. Verfahren nach einem der Ansprüche 9 und 11, in dem das elementare Richtungsänderungssteuergesetz der Kostenindexminimierung bestimmt wird, indem die Flugbahn EVTM in Peilschritte zerschnitten wird, auf deren jedem man den von der Bezugsflugstrecke um Y abweichenden Punkt anpeilt (2), der die erste Ableitung, bezüglich der Variablen Y, des Kostenindex annuliert (3), indem man den Ort der so angepeilten Punkte bestimmt (5), der die Kurve der Gleichung

$$Y(t) = - \frac{1}{2K} \frac{\Delta Z}{\Delta Y}$$

ist, und indem eine dreifache Ableitung der Funktion Y(t) vorgenommen wird.

13. Verfahren zur Steuerung eines Luftfahrzeugs in sehr niedriger Höhe, in dem man im Flug (63) eine horizontale, dem Boden und Gefährdungen ausweichende Flugbahn EVTM bestimmt, dadurch gekennzeichnet, daß man zur Bestimmung der Flugbahn EVTM einen Leistungsindex minimiert, der aus dem Integral eines Kostenindex

$$Z = KY^2$$

besteht, in dem

    Z   die Höhe des Luftfahrzeugs,
    Y   die seitliche Abweichung des Standorts des Luftfahrzeugs von einer Bezugsflugstrecke und
    K   ein Wichtungskoeffizient ist.

14. Steuerverfahren nach Anspruch 13, in dem der Minimierung des Kostenindex ein elementares Richtungsänderungssteuergesetz entspricht.

**15.** Steuerverfahren nach Anspruch 14, in dem dieses elementare Richtungsänderungssteuergesetz durch andere verschiedene elementare Richtungsänderungssteuergesetze korrigiert wird, die Flugschneisen-, Richtungsänderungsgeschwindigkeits- bzw. Richtungsänderungswinkelbeschränkungen berücksichtigen.

**16.** Steuerverfahren nach einem der Ansprüche 14 und 15, in dem die elementaren Richtungsänderungssteuergesetze durch Wichtungskoeffizienten korreliert werden.

**17.** Steuerverfahren nach einem der Ansprüche 14 bis 16, in dem das elementare Richtungsänderungssteuergesetz der Kostenindexminimierung bestimmt wird, indem die Flugbahn EVTM in Peilschritte zerlegt wird, auf deren jedem man den von der Bezugsflugstrecke um Y abweichenden Punkt anpeilt (2), der die erste Ableitung, bezüglich der Variablen Y, des Kostenindex annuliert (3), indem man den Ort der auf diese Weise angepeilten Punkte bestimmt (5), der die Kurve der Gleichung

$$Y(t) = - \frac{1}{2K} \frac{\Delta Z}{\Delta Y}$$

ist, und indem eine dreifache Ableitung der Funktion Y(t) vorgenommen wird.

## Claims

**1.** Method for the very low altitude flying of an aircraft which is able to undergo a maximum bucking load factor (51) and a maximum diving load factor (52), in which there is determined in flight (63) a horizontal trajectory EVTM avoiding land and threats, corresponding to a rolling control law, then (64) a vertical trajectory SDT following land, corresponding to a vertical acceleration control law (62), characterized by the fact that the lateral accelerations of the aircraft on the horizontal trajectory EVTM are determined (50) and that the bucking portions of the vertical trajectory SDT are determined (64) by the margin of the bucking load factor (60) left available by the lateral acceleration on the trajectory EVTM.

**2.** Method according to Claim 1, in which the bucking portions of the trajectory SDT are determined in order that the aircraft is subject to a vertical acceleration such that it undergoes the maximum bucking load factor.

**3.** Method according to one of Claims 1 and 2, in which the diving portions of the trajectory SDT are determined (58) in order that the aircraft undergoes the maximum diving load factor.

**4.** Method according to one of Claims 1 to 3, in which, in order to determine the diving portions of the trajectory SDT, one isolates (57) on a working horizon, critical peaks to be overflown at a clearance height and with zero inclination.

**5.** Method according to Claim 4, in which the critical peaks exceed a curve of equation

$$H = R - (R^2 - D^2)^{1/2}$$

in which

D is the distance between each of these critical peaks and the obstacles included in the working horizon,
H is the difference in height between each of these critical peaks and these obstacles and
R is the sum of the minimum bucking radius of curvature and of the minimum diving radius of curvature of the aircraft.

**6.** Method according to one of Claims 4 and 5, in which the diving portions (58) of the trajectory SDT are circular and tangential to the critical peaks.

**7.** Method according to Claim 6, in which the bucking portions of the trajectory SDT are determined by applying corrections to the intersections of the diving trajectory portions.

**8.** Method according to one of Claims 1 to 7, in which, in order to determine (63) the trajectory EVTM, one minimizes a performance index constituted by the integral of a cost index

$$Z + KY_2$$

in which

Z   is the altitude of the aircraft,
Y   is the lateral difference between the position of the aircraft and a reference itinerary and
K   is a coefficient of equilibrium.

9. Method according to Claim 8, in which an elementary rolling control law corresponds to the minimization of the cost index.

10. Method according to Claim 9, in which said elementary rolling control law is corrected by other separate elementary rolling control laws respecting constraints of passage, rolling speed and rolling angle, respectively.

11. Method according to one of Claims 9 and 10, in which the elementary rolling control laws are correlated by coefficients of equilibrium.

12. Method according to one of Claims 9 to 11, in which the elementary control law for minimization of the cost index is determined by cutting the trajectory EVTM into sighting steps, on each of which one sights (2) the point, diverging from the reference itinerary of Y, which cancels (3) the first derivative, with respect to the variable Y, of the cost index, by determining (5) the location of the point thus sighted, which is the curve of equation

$$Y(t) = - \frac{1}{2K} \frac{\Delta z}{\Delta Y}$$

and by proceeding with a triple derivation of the function Y(t).

13. Method for the very low altitude flying of an aircraft, in which there is determined in flight (63) a horizontal trajectory EVTM avoiding land and threats, characterized by the fact that, in order to determine the trajectory EVTM, one minimizes a performance index constituted by the integral of a cost index

$$Z + KY^2$$

in which

Z   is the altitude of the aircraft,
Y   is the lateral difference between the position of the aircraft and a reference itinerary and
K   is a coefficient of equilibrium.

14. Flying method according to Claim 13, in which an elementary rolling control law corresponds to the minimization of the cost index.

15. Flying method according to Claim 14, in which said elementary rolling control law is corrected by other separate elementary rolling control laws respecting constraints of passage, rolling speed and rolling angle, respectively.

16. Flying method according to one of Claims 14 and 15, in which the elementary rolling control laws are correlated by coefficients of equilibrium.

17. Flying method according to one of Claims 14 to 16, in which the elementary control law for minimization of the cost index is determined by cutting the trajectory EVTM into sighting steps, on each of which one sights (2) the point, diverging from the reference itinerary of Y, which cancels (3) the first derivative, with respect to the variable Y, of the cost index, by determining (5) the location of the point thus sighted, which is the curve of equation

$$Y(t) = - \frac{1}{2K} \frac{\Delta z}{\Delta Y}$$

and by proceeding with a triple derivation of the function Y(t).

FIG.1

FIG.2

FIG.4

FIG.3

FIG.5

$\ddot{Z}_{(m)}$

FIG.6

20  23  22  21  24

0

m

$\ddot{Z}_{(g)}$

FIG.7

26  25

0

m

$\ddot{Z}_{(g)}$

FIG.8

27

0

m

$m_1$  $m_2$

FIG.9